Europäisches Patentamt

European Patent Office

Office européen des brevets

(19)

(11) EP 1 240 492 B1

## (12) EUROPÄISCHE PATENTSCHRIFT

(45) Veröffentlichungstag und Bekanntmachung des Hinweises auf die Patenterteilung:
**19.01.2005 Patentblatt 2005/03**

(21) Anmeldenummer: **00993640.2**

(22) Anmeldetag: **22.12.2000**

(51) Int Cl.$^7$: **G01M 3/32**

(86) Internationale Anmeldenummer:
**PCT/EP2000/013139**

(87) Internationale Veröffentlichungsnummer:
**WO 2001/048452 (05.07.2001 Gazette 2001/27)**

(54) **VERFAHREN UND VORRICHTUNG FÜR DIE BESTIMMUNG DER GASDURCHLÄSSIGKEIT EINES BEHÄLTERS**

METHOD AND DEVICE FOR THE DETERMINATION OF THE GAS PERMEABILITY OF A CONTAINER

PROCEDE ET DISPOSITIF POUR DETERMINER LA PERMEABILITE AU GAZ D'UN CONTENANT

(84) Benannte Vertragsstaaten:
**AT BE CH CY DE DK ES FI FR GB GR IE IT LI LU MC NL PT SE TR**

(30) Priorität: **23.12.1999 DE 19962303**

(43) Veröffentlichungstag der Anmeldung:
**18.09.2002 Patentblatt 2002/38**

(73) Patentinhaber: **Applied Films GmbH & Co. KG**
**63755 Alzenau (DE)**

(72) Erfinder:
  • **GEBELE, Thomas**
    **63579 Freigericht (DE)**

  • **HENRICH, Jürgen**
    **63694 Limeshain (DE)**

(74) Vertreter: **Schickedanz, Willi, Dr. Dipl.-Ing.**
    **Langener Strasse 68**
    **63073 Offenbach (DE)**

(56) Entgegenhaltungen:
    **EP-A- 0 741 288      EP-A- 0 760 722**
    **DE-A- 2 610 800      US-A- 3 413 841**
    **US-A- 5 333 492**

**Beschreibung**

Die Erfindung betrifft eine Vorrichtung und ein Verfahren nach den Oberbegriffen der Patentansprüche 1, 2 und 13, 14.

Nahezu alle fest verschlossenen Behälter weisen eine mehr oder weniger große Durchlässigkeit für Gase auf. Insbesondere Kunststoffflaschen, z. B. aus Polyethylenterephthalat (PET) neigen dazu, Gase, z. B. $CO_2$ nach außen abzugeben, wenn ihr Innendruck größer als der Außendruck ist. Man ist deshalb bestrebt, durch eine Beschichtung auf der Innenseite und/oder auf der Außenseite dieser Flasche den Gasdurchlass zu verringern.

Um die Verbesserungen feststellen zu können, die durch solche Beschichtungen erreicht werden, ist es erforderlich, die Gasdurchlässigkeit der Flaschen vor und nach der Beschichtung festzustellen. Hierzu sind Messgeräte zur Bestimmung der Gasdurchlässigkeit bzw. der Permeation erforderlich.

Um die Dichtheit eines Behälters zu prüfen, ist es bereits bekannt, mit Hilfe von Überdruck in dem Behälter eine Diffusion von Gasen nach außen zu erzeugen (Prospekt der Leybold-Heraeus GmbH, "Industrielle Dichtheitsprüfung", 1987, S. 64, 65). Bei dieser Überdruck-Methode wird der Prüfling mit einem Testgas oder Testgas/Luftgemisch gefüllt und von einer Hülle umgeben, deren Volumen bekannt ist. Das durch die Lecks des Prüflings austretende Testgas reichert sich in der Hülle an und wird nach einer festgesetzten Anreicherungs- oder Standzeit mit einem Schnüffler gemessen.

Nachteilig ist hierbei, dass ein aufwendiger Schnüffler eingesetzt wird, der ein Massenspektrometer enthält (vgl. Wutz, Adam, Walcher, Theorie und Praxis der Vakuumtechnik, 4. Auflage, 1988, S. 466,467). Bei jedem Wechsel des Testgases muss auch jedes Mal der Massenspektrometer ausgetauscht oder neu kalibriert werden.

Es ist weiterhin ein Verfahren zur Messung der Gasdurchlässigkeit der Wandung und/oder des Verschlusses dreidimensionaler Hüllkörper bekannt, bei dem der zu prüfende Hüllkörper, der eine gasförmige Füllung bei Atmosphärendruck enthält, in eine Messkammer gestellt und der freie Raum zwischen dem Hüllkörper und der inneren Messkammer mit Füllkörpern aufgefüllt wird (DE 26 10 800). In der Messkammer wird hierauf ein Unterdruck erzeugt und die Zeit gemessen, innerhalb welcher ein bestimmtes Druckanstiegsintervall durchlaufen wird, wobei die dazu benötigte Zeit einen Maßstab für die Leckrate des Hüllkörpers und/oder des Verschlusses darstellt. Die Druckmessung erfolgt mit einem Pirani-Vakuum-Messelement, bei dem es sich um ein Widerstandsmanometer handelt, dessen elektrischer Widerstand vom Gasdruck abhängt. Nachteilig bei diesem Pirani- oder Wärmeleitungs-Messelement ist, dass es nur in einem Druckbereich von 0,01 mbar bis 1 mbar genau und im Druckbereich von 10 bis 1000 mbar ungenau arbeitet, sowie für Drücke größer 100 mbar nur noch eine minimale Auflösung besitzt. Außerdem ist bei diesem Verfahren nachteilig, dass in der Messkammer ein Unterdruck bis auf 0,02 Torr (= 0,027 mbar = 2,7 Pa) erzeugt werden muss. Hierzu ist eine Vakuumpumpe erforderlich.

Weiterhin ist es in der Lecksuchtechnik bekannt, ein Leck in einem Prüfling durch Überdruck in dem Prüfling zu erkennen (Wutz, Adam, Walcher: Theorie und Praxis der Vakuumtechnik, 4. Auflage, 1988, S. 483). Hierbei wird der Prüfling mit dem Volumen V über ein Ventil so lange mit Testgas gefüllt, bis der gewünschte Druck $p_1$ erreicht wird. Dann wird das Ventil geschlossen und die Zeitspanne $\Delta t$ gemessen, in der der Druck um den Betrag $\Delta p_1 \ll p_1$ abfällt. Die Gesamtleckrate des Prüflings beträgt dann

$$q_L = V \cdot \frac{\Delta p_1}{\Delta t}$$

Die Nachweisempfindlichkeit bei der Überdrucklecksuche durch Messen des Druckabfalls ist auf $1\ \text{mbar} \cdot \ell \cdot \text{s}^{-1}$ begrenzt; dieser Wert ist jedoch nur bei Verwendung spezieller Differenzdruckmessgeräte zu erreichen. Bei dieser Lecksuchtechnik wird also nicht außerhalb des Prüflings ein Unterdruck erzeugt, sondern in dem Prüfling ein Überdruck. Da außerhalb des Prüflings kein begrenzter und definierter Raum vorhanden ist, muss ein Druckabfall im Prüfling selbst gemessen werden. Nachteilig ist hierbei, dass es bei Prüflingen mit großem Volumen sehr lange dauert, bis ein linearer Druckabfall einsetzt.

Der Erfindung liegt die Aufgabe zugrunde, mit einfachen und kostengünstigen Messgeräten die Permeation von Behältern, insbesondere von Kunststoffbehältern, zu ermitteln.

Diese Aufgabe wird gemäß den Merkmalen der Ansprüche 1, 2 und 12, 13 gelöst.

Die Erfindung betrifft somit eine Vorrichtung und ein Verfahren für die Bestimmung der Gasdurchlässigkeit eines Behälters, z. B. einer Flasche aus PET. Dieser Behälter wird dabei von einer Umhüllung umgeben, die den Behälter hermetisch gegen die Umwelt abriegelt. Der Zwischenraum zwischen dem Behälter und der Umhüllung weist im Vergleich zum Volumen des Behälters nur ein sehr kleines Volumen auf. Zu Beginn der Bestimmung der Gasdurchlässigkeit wird dieser Zwischenraum z. B. auf Atmosphärendruck gesetzt, während dem Behälter über spezielle Zuleitungen ein Testgas zugeführt wird, bis dieser Behälter im Vergleich zum Zwischenraum auf Überdruck gebracht ist. Durch die anschließende Diffusion des Testgases durch die Wand des Behälters in den Zwischenraum erhöht sich der Druck in dem Zwischenraum. Die Druckerhöhung pro Zeiteinheit ist dabei ein Maß für die Gasdurchlässigkeit des Behälters.

Der mit der Erfindung erzielte Vorteil besteht insbesondere darin, dass durch die Verwendung von einfachen Druckmessgeräten die Permeation im Behälter unabhängig von dem jeweils als Überdruckmedium gewählten Gas ermittelt werden kann. Außerdem erfolgt die Ermittlung der Permeation relativ schnell. Hinzu kommt, dass sehr schnell die Verbesserung der Gasundurchlässigkeit durch Beschichtungen des Behälters, etwa mittels PVD-, CVD- oder PECVD-Verfahren festgestellt werden kann. Dies ist insbesondere bei Getränkeflaschen von Bedeutung, die mit $CO_2$-haltiger Flüssigkeit gefüllt werden. Ohne Beschichtung verlieren solche Flaschen etwa 3 % ihrer Kohlensäure pro Woche. Des Weiteren ist von Vorteil, dass die Erfindung nicht auf ein bestimmtes Testgas beschränkt ist. Außer $CO_2$ können deshalb auch Sauerstoff, Helium oder Gasgemische verwendet werden.

Ein Ausführungsbeispiel der Erfindung ist in den Zeichnungen dargestellt und wird im Folgenden näher beschrieben. Es zeigen:

Fig. 1 eine Vorrichtung zur Ermittlung der Permeation einer Kunststoffflasche ohne Darstellung eines Drucksensors;

Fig. 2 eine Kurve, die den Druckanstieg in einem Behälter darstellt, der eine Kunststoffflasche umgibt;

Fig. 3 eine Anordnung mit mehreren Vorrichtungen zur Ermittlung der Permeation von verschiedenen Kunststoffflaschen;

Fig. 4 eine Anordnung von vier Vorrichtungen zur Ermittlung der Permeation von Kunststoffflaschen, wobei bei einer Vorrichtung der die Kunststoffflaschen umgebende Behälter weggenommen ist;

Fig. 5 eine Prinzipdarstellung, welche die Befestigung eines Behälters zeigt, der über eine Kunststoffflasche gestülpt wird;

Fig. 6 eine Anordnung wie in Fig. 4, jedoch mit zwei weiteren Anordnungen, die mit Hauben verdeckt sind;

Fig. 7 eine komplette Anlage mit insgesamt drei Anordnungen, die jeweils vier Vorrichtungen zur Messung der Permeation von Kunststoffflaschen aufweisen.

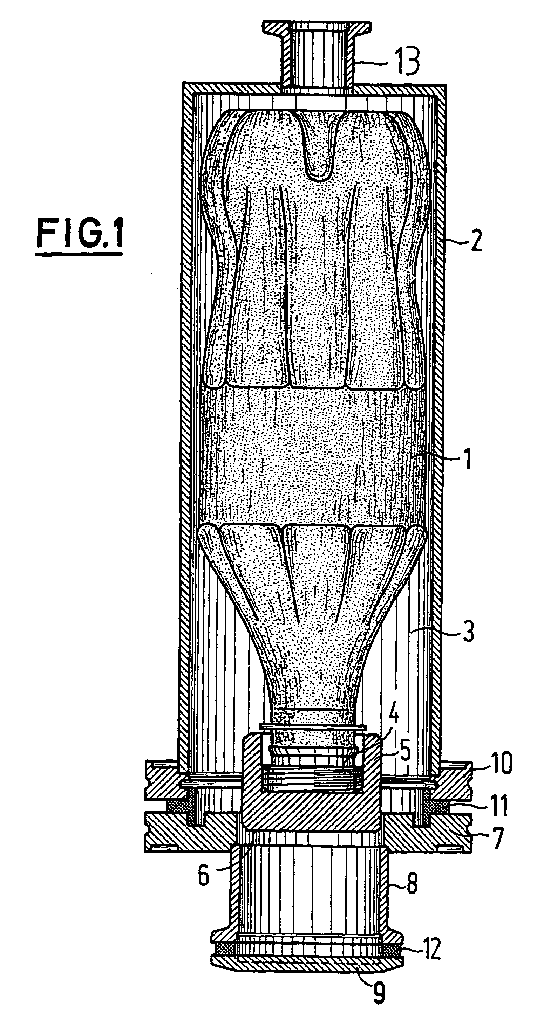

In der Fig. 1 ist eine aus Kunststoff bestehende Flasche 1 auf dem Kopf stehend dargestellt, die ein bekanntes Volumen $V_1$ besitzt. Statt einer Flasche könnte auch ein beliebiger anderer Hohlkörper verwendet werden. Die Flasche 1 ist von einem druckfesten und hermetisch verschlossenen Behälter 2 mit dem bekannten Volumen $V_2$ umgeben. Der Zwischenraum 3 zwischen dem Behälter 2 und der Flasche 1 hat somit das Volumen $V_3 = V_2 - V_1$. Für das Verhältnis der Volumina von Flasche 1 und Behälter 2 gilt $V_2 - V_1 < V_1$, d. h. das Volumen des Zwischenraums 3 ist kleiner als das Volumen der Flasche 1. Zu Beginn einer Permeationsmessung herrscht in dem Behälter 2 und damit auch in dem Zwischenraum 3 vorzugsweise Atmosphärendruck $p_0$.

In der Flasche 1 herrscht dagegen Überdruck, und zwar hervorgerufen von einem bestimmten Gas, z. B. von $CO_2$, das zuvor in die Flasche 1 eingeführt wird. Die Flasche 1 weist am Ende ihres Halses ein Gewinde 4 auf, das mit einer Verschlusskapsel 5 im Eingriff steht. Bevor diese Verschlusskapsel 5 auf die Flasche 1 aufgeschraubt wird, wird in diese Flasche 1 ein Druckgas eingegeben, z. B. $CO_2$ in Form von Trockeneis. Die Verschlusskapsel 5 ist in eine Öffnung 6 eines Verschlussdeckels 7 zum Verschließen des Behälters 2 eingeführt. Diese Öffnung 6 ist ihrerseits mit einem Hohlstopfen 8 verschlossen, der einen Deckel 9 aufweist. Zwischen dem Verschlussdeckel 7 und einem Flansch 10 des Behälters 2 ist ein Dichtring 11 vorgesehen. Desgleichen befindet sich zwischen dem Deckel 9 des Hohlstopfens 8 und dem Hohlstopfen 8 ein Dichtring 12. Im oberen Bereich des Behälters 2 ist ein Stutzen 13 vorgesehen, in dem ein Drucksensor angeordnet sein kann. Bei dem Flansch 10 handelt es sich um einen Klammerflansch, der an den Behälter 2 angeschweißt ist, während es sich bei dem Deckel 9 um einen Blindflansch handelt, der mittels des Dichtrings 12 den Hohlstopfen 8 abschließt.

Herrscht in der Flasche 1 definitionsgemäß ein $CO_2$-Druck $p_{Fl}$ und in dem Zwischenraum 3 ein Luftdruck $p_Z$, wobei $p_Z$ zunächst dem Atmosphärendruck $p_0$ entspricht, und gilt außerdem $p_{Fl} > p_Z$, so wird durch den in der Flasche 1 herrschenden Überdruck zunächst einmal die Wandung der aus Kunststoff bestehenden Flasche 1 mit $CO_2$ gesättigt, bevor $CO_2$ in den Zwischenraum 3 tritt. Bei einer PET-Flasche von 0,25 mm Wandstärke, 28 g Gewicht, einem Volumen von 0,5 l und dem Testgas $CO_2$ dauert dieser Sättigungsvorgang etwa 12 bis 24 Stunden.

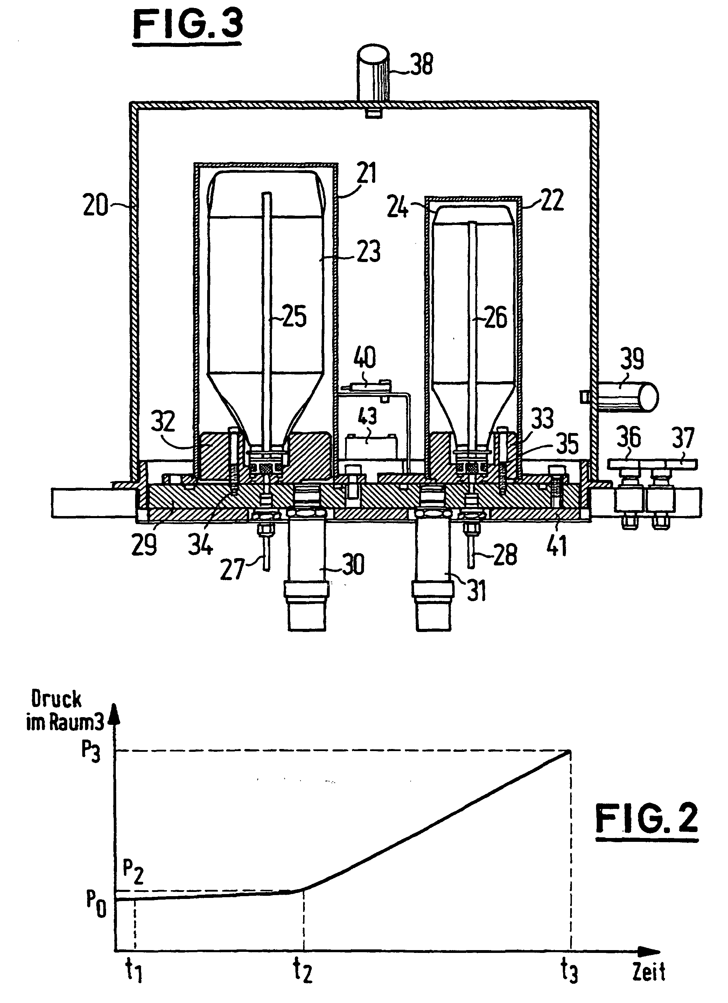

Der Druck im Zwischenraum nimmt deshalb den in der Fig. 2 dargestellten Verlauf an, d. h. er bleibt während einer Zeit $t_2 - t_1$ nahezu konstant, d. h. auf dem Wert $p_Z = p_0$ um dann von $t_2$ an nahezu linear bis auf den Wert $p_3$ anzusteigen. Wird die Flasche 1 vor der Einführung in den Behälter 2 für die Zeit $t_2 - t_1$ dem Innendruck $p_{Fl}$ ausgesetzt, so entfällt das horizontale Stück der in der Fig. 2 gezeigten Kurve, und es beginnt sofort der nahezu lineare Kurvenanstieg, der in der Fig. 2 durch den Bereich $t_3 - t_2$ charakterisiert ist. Bei den angegebenen Daten einer PET-Flasche beträgt der Zeitabschnitt $t_3 - t_2$ etwa 24 bis 72 Stunden.

Während der Druck im Zwischenraum 3 im Zeitraum $t_3 - t_2$ linear oder quasi-linear zunimmt, nimmt der Druck in der Flasche 1 entsprechend ab. Wie oben bereits ausgeführt, beträgt die Gesamtleckrate eines Prüflings, hier der Flasche 1, $q_L = V \cdot \Delta p_1 / \Delta t$. Diese Definition der Gesamtleckrate bezieht sich auf den Innendruck eines Prüflings, wobei der Außendruck konstant ist und z. B. stets Atmosphärendruck hat, was daraus resultiert, dass kein Behälter 2 vorgesehen ist.

Bei der Anordnung gemäß Fig. 1 liegen solche Verhältnisse nicht vor, weil der Druck im Zwischenraum 3 ständig zunimmt. Die Permeation durch die Flasche 1 endet, wenn der Druck in der Flasche 1 gleich dem Druck im Zwischenraum 3 ist, also der Zustand $p_{FI}$ - $\Delta_{PFI}$ = $p_Z$ + $\Delta_{PZ}$ herrscht. In der Flasche 1 stellt sich somit am Ende der Permeation kein Atmosphärendruck ein, wie es bei Nichtvorhandensein des Behälters 2 der Fall wäre.

In der Flasche 1, die voraussetzungsgemäß nur mit $CO_2$ gefüllt ist, liegen keine Partialdrücke vor. Dagegen setzt sich der Gesamtdruck im Zwischenraum 3 aus Partialdrücken zusammen, die durch die verschiedenen Gaskomponenten im Zwischenraum 3 hervorgerufen werden (Dalton'sches Gesetz). Für die vorliegende Erfindung sind indessen nur die Gesamtdrücke von Bedeutung. Im Gegensatz zu der bekannten Ermittlung der Gesamtleckrate, bei der die Druckänderungen in der Flasche 1 ermittelt werden, wird erfindungsgemäß der Druckverlauf im Zwischenraum 3 ermittelt. Die Messung des Druckverlaufs im Zwischenraum 3 hat gegenüber der Messung des Druckverlaufs in der Flasche 1 den Vorteil, dass auf einem niedrigen Druckniveau, z. B. 1000 mbar statt 4000 bis 6000 mbar, gemessen werden kann und damit ein Drucksensor mit kleinerem Messbereich, z. B. 0 bis 1500 mbar, der bei gegebener Auflösung, z. B. 0,25 % des Vollausschlags, eine deutlich höhere Auflösung als z. B. ein Drucksensor für den Druckbereich von z. B. 0 bis 7500 mbar liefert, eingesetzt werden kann. Als Druckmessgeräte kommen hierbei z. B. solche in Frage, bei denen eine mechanische oder piezoelektrische Membran durch den auf eine ihrer Seiten wirkenden Druck eine Auslenkung der Membran bewirkt, die ein Maß für den Druck darstellt.

Als Maß für die Permeation P kann die Größe

$$P = V_3 \cdot \frac{p_3 - p_2}{t_3 - t_2}$$

herangezogen werden, wobei $p_3$ der Druck im Zwischenraum 3 zum Zeitpunkt $t_3$ und $p_2$ der Druck im Zwischenraum zum Zeitpunkt $t_2$ ist.

Der Zeitraum $t_2$ - $t_1$, d. h. die Zeit, die erforderlich ist, bis das Testgas $CO_2$ durch die Flaschenwand tritt, beträgt, wie bereits erwähnt, bei einer Kunststoffflasche aus PET etwa 12 bis 24 Stunden, während die Zeit $t_3$ - $t_2$ vom Druckanstieg im Zwischenraum 3 bis zum Zustand $p_3$ bei dem gleichen Material 24 bis 72 Stunden beträgt.

Ist das Volumen des Zwischenraums 3 groß im Vergleich zum Volumen der Flasche 1. dauert es relativ lange, bis der Druck im Zwischenraum ansteigt, weil ein großes Volumen durch die Permeation aus einem kleinen Volumen gespeist wird. Es ist deshalb vorteilhaft, den Zwischenraum 3 möglichst klein im Verhältnis zum Volumen der Flasche 1 zu halten. Dazu können Volumenverdränger in den Zwischenraum 3 eingebracht werden. Es ist auch möglich, die Innenwand des Behälters mit Riffelungen zu versehen, an welche die Außenwand der Flasche 1 stößt. Hierdurch wird gleichzeitig verhindert, dass sich die Flasche 1 bei Überdruck ausbeult oder platzt.

Die hier definierte Permeation P bezieht sich auf den Zwischenraum 3. Sie korreliert aber mit der aus der Literatur bekannten Gesamtleckrate $q_L$, wie sich aus der nachfolgenden Überlegung ergibt: Da bei idealen Gasen in allen Druck- und Temperaturbereichen der Quotient pV/T konstant ist, gilt für den Inhalt der Flasche 1 $p_{FI}(t) \cdot V_{FI}/T = K_1$. und für den Inhalt des Zwischenraums $p_Z(t) \cdot V_Z/T = K_2$. Während also der Druck in der Flasche 1 und in dem Zwischenraum 3 zeitabhängig sind, bleiben die Volumina von Flasche 1 und Zwischenraum 3 konstant. Bei gleicher Temperatur gilt somit

$$\frac{P_{FI}(t) \cdot V_{FI} \cdot T}{T \cdot p_Z(t) \cdot V_Z} = \frac{K_1}{K_2} = K_3$$

Das Verhältnis von $V_{FI}$ zu $V_Z$ ist ebenfalls eine Konstante, sodass gilt

$$\frac{p_{FI}(t)}{p_Z(t)} = K_4$$

oder

$$p_{FI}(t) = p_Z(t) \cdot K_4,$$

d. h. zwischen dem Druck in der Flasche und dem Druck in dem Zwischenraum besteht - jedenfalls bei idealen Gasen und bei Außerachtlassung von Wandsättigungserscheinungen - eine lineare Beziehung. Dies bedeutet, dass die Permeation proportional zur Gesamtleckrate $q_L$ ist.

Will man den Verlauf der Wandsättigung mit Gas, wie sie vornehmlich durch den Zeitbereich $t_2$ - $t_1$ charakterisiert ist, näher erfassen, kann man auch ein Druckmessgerät in der Flasche selbst einsetzen. Dieses Druckmessgerät würde einerseits dazu verwendet, den Füllvorgang zu kontrollieren und den Fülldruck zu bestimmen, während es andererseits den zu den Zeitbereichen $t_2$ - $t_1$ und $t_3$ - $t_2$ der Fig. 2 korrespondierenden Druckverlauf in der Flasche selbst messen würde. Dieser Druckverlauf ist, wie Messungen zeigen, keine quasi gerade Kurve wie das Kurventeil $t_2$ - $t_1$ und $t_3$ - $t_2$ in Fig. 2, sondern eine gekrümmte Kurve, bei welcher ein deutlicher Übergang wie in Punkt $t_2$ der Fig. 2 nicht vorhanden ist. Dieser Umstand trägt mit dazu bei, dass ein Messen des Innendrucks der Flasche weniger präzise Aussagen über die tatsächliche Permeation einer Flasche zulässt. Das aus der Sicht der Zwischenraummessung relativ schlagartige Austreten des Gases nach der Auffüllung der Flaschenwand mit Gas, hat aus der Sicht der Innenflaschenmessung keine Entsprechung, weil die Massenströme unterschiedlich sind. Ist jedoch der Sättigungszustand erreicht, sind die Massenströme innerhalb und außerhalb der Flasche gleich groß. Das Verhalten eines Kunststoffs bis zur Sättigung ist in vielen Fällen von Bedeutung. So ist es wichtig zu wissen, welche Gasmenge zur Sättigung der Flaschenwand oder des gesamten Behälters bei vorgegebenen Druckverhältnissen und vorgegebener Temperatur notwendig ist.

In der Fig. 3 ist ein Teil einer Anlage dargestellt, mit der die Permeationen mehrerer Flaschen oder anderer Behälter festgestellt werden können. Mit 20 ist eine Abdeckhaube bezeichnet, die über insgesamt vier Gehäuse gestülpt ist, von denen man nur zwei Gehäuse 21, 22 in der Fig. 3 erkennt. In diesem Gehäuse 21, 22 ist jeweils eine Flasche 23, 24 angeordnet, von denen die Flasche 23 z. B. 1000 ml und die Flasche 24 z. B. 500 ml Inhalt hat. In diese Flaschen 23, 24 ragt jeweils ein Spülrohr 25, 26 für Testgas, z. B. Kohlendioxid, das mit einer Gaszuleitung 27,28 in Verbindung steht. Zwischen den Gaszuleitungen 27, 28 und den Spülrohren 25, 26 ist eine Heizplatte 41 vorgesehen, in welche die Enden von Drucksensoren 30, 31 eingelassen sind. Bei den Drucksensoren handelt es sich vorzugsweise um so genannte Absolutdrucksensoren mit vorzugsweise innenliegender Membran, die bei einem Umgebungsdruck von ca. 1000 mbar den zu messenden Druck anzeigen. Solche Absolutdrucksensoren weisen ein verkapseltes Referenzvolumen auf, sodass äußere Luftdruckschwankungen während der Messung keinen Einfluss auf die gemessenen Druckwerte ausüben können. Luftdruckänderungen vor Beginn der Messung verändern nur den Startwert der Messung, der für die Berechnung der Steigung des Drucks über der Zeit ohne Bedeutung ist. Drucksensoren, welche für die beschriebenen Zwecke geeignet sind, sind z. B. als piezoresistive oder Dünnfilm-Sensoren auf dem Markt erhältlich (vgl. IMT-Sensor 3248 der Fa. IMT Industrie-Meßtechnik GmbH, 60439 Frankfurt). Anstelle von Absolutdruck-Sensoren können auch Sensoren mit negativem oder positivem Überdruck eingesetzt werden. Oberhalb dieser Drucksensoren 30, 31 sind Gewindefassungen 32, 33 angeordnet, in welche die Gewinde 34, 35 der Flaschen 23, 24 eingeschraubt sind. Das den Flaschen 23, 24 über die Spülrohre 25, 26 zugeführte Gas kann über Ventile 36, 37 gesteuert werden. Von diesen Ventilen 36, 37 führen nicht dargestellte Verbindungsleitungen zu Gasflaschen, die in einem später noch dargestellten Schrank oder außerhalb dieses Schranks untergebracht sind. Über diese Ventile 36, 37 wird der Gaszufluss zu den Gaszuleitungen 27, 28 gesteuert. Die Abdeckhaube 20 kann mit Hilfe von Griffen 38, 39 abgehoben bzw. aufgesetzt werden. Mit 40 ist eine Halterung für einen Widerstandsthermometer bezeichnet, mit dem die Temperatur in dem Behälter 21 gemessen wird. Diese Temperatur dient zur Regelung einer Heizung, die durch die Heizplatte 41 realisiert wird. Diese Heizplatte ist unterhalb einer Grundplatte 29 angeordnet. Um lokale Temperaturstaus zu vermeiden, ist ein Ventilator vorgesehen, der die Luft innerhalb der Abdeckhaube umwälzt.

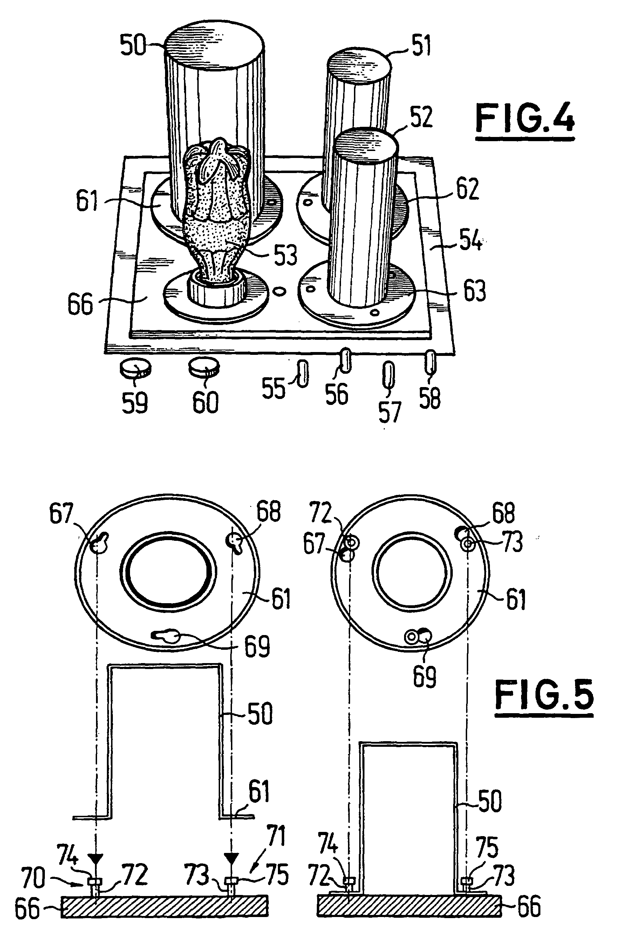

Die Fig. 4 zeigt eine Anordnung von drei Gehäusen 50, 51, 52, die jeweils eine nicht sichtbare Kunststoffflasche umgeben sowie eine Kunststoffflasche 53 ohne Gehäuse. Mit dieser Anordnung ist es möglich, die Permeation von vier Kunststoffflaschen gleichzeitig zu ermitteln. Die Gehäuse 50 bis 52 und die Flasche 53 befinden sich innerhalb eines Rahmens 54, der für die Aufnahme einer Abdeckhaube dient. Vor diesem Rahmen befinden sich vier Absperrhähne 55 bis 58 sowie zwei Befüllventilschalter 59, 60. Die Absperrhähne 55 bis 58 haben lediglich die Aufgabe, das Flascheninnenvolumen hermetisch abzuregeln, wie sonst etwa die Kappe 5 in Fig. 1. Die Befüllventilschalter 59, 60 sind dagegen Steuerventile, mit denen die Bedienungsperson durch Druck auf die Schalter 59, 60 die Flaschen befüllen bzw. entleeren kann. Hierbei müssen selbstverständlich die Absperrhähne 55 bis 58 geöffnet sein. Die Bedienungsperson hat somit die Möglichkeit, einzelne oder mehrere Flaschen gleichzeitig zu füllen. Bei gleichzeitiger Befüllung mehrerer Flaschen, was den Regelfall darstellt, kann ein exakt gleicher Innendruck in allen Flaschen erreicht werden.

Die Gehäuse 50 bis 52 weisen an ihrem unteren Ende jeweils eine kreisringförmige Platte 61 bis 63 auf, mit der sie innerhalb des Rahmens 54 befestigt werden können.

In der Fig. 5 ist im Einzelnen gezeigt, wie diese Befestigung erfolgt. In der linken Darstellung der Fig. 5 ist ein Gehäuse 50 mit seiner kreisringförmigen Platte 61 in einer Position vor der Befestigung mit einem Boden 66 dargestellt. In der Platte 61 sind drei Bohrungen 67, 68, 69 vorgesehen, die jeweils eine Verjüngung aufweisen. Zu diesen Bohrungen 67, 68, 69 korrespondieren Stifte 70, 71 am Boden 66, die aus einem Schaft 72, 73 und einem Kopf 74, 75 bestehen. Um das Gehäuse 50 am Boden 66 zu befestigen, werden die Bohrungen 67, 68, 69 über die korrespondierenden Stifte 70, 71 gestülpt. Sodann wird das Gehäuse 50 relativ zu den Stiften 70, 71 verdreht, sodass die Schafte 72, 73 in die Verjüngungen der Bohrungen 67 bis 69 gelangen. Da die Köpfe 74, 75 der Stifte 70, 71 breiter sind als diese Verjüngungen, sitzt das Gehäuse fest am Boden. Die Darstellung auf der rechten Seite der Fig. 5 zeigt das Gehäuse 50 in arretierter Position.

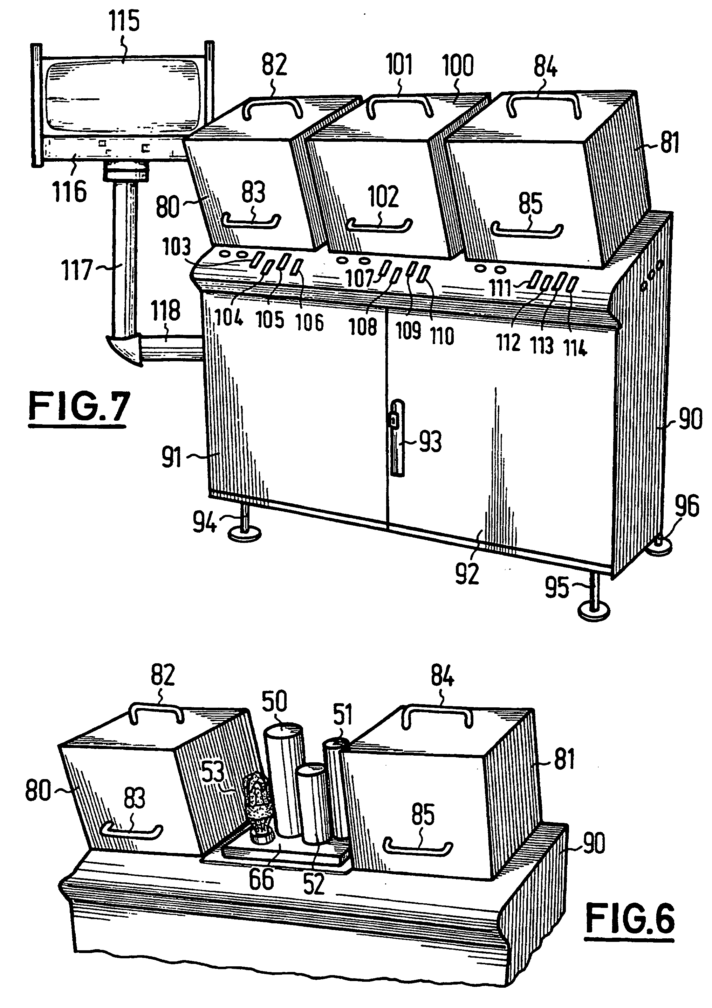

Die Fig. 6 zeigt in ihrer Mitte eine Anordnung wie die Fig. 4. Rechts und links von dieser Anordnung ist jeweils eine Haube 80, 81 mit jeweils zwei Griffen 82, 83 bzw. 84, 85 angeordnet. Unter jeder dieser Hauben 80, 81 befinden sich vier Messanordnungen mit Behältern und Flaschen. Die Hauben 80, 81 mit den Messanordnungen sind auf einem nur teilweise dargestellten Schrank 90 angeordnet.

In der Fig. 7 ist dieser Schrank 90 komplett dargestellt. Er weist zwei Türen 91, 92, eine Verriegelung 93 und vier Beine auf, von denen nur drei Beine 94, 95, 96 in der Fig. 7 zu erkennen sind.

Die in der Fig. 6 dargestellten Gehäuse 50 bis 52 bzw. die Flasche 53 sind in der Fig. 7 nicht zu sehen, weil eine Haube 100 mit zwei Griffen 101, 102 über sie gestülpt ist. Vor der Haube 80, 81, 100 sind jeweils vier Gasventilschalter 103 bis 106, 107 bis 110 und 111 bis 114 vorgesehen.

Neben dem Schrank ist ein Monitor 115 mit einem Rechner 116 angeordnet, der von einem vertikalen Arm 117 getragen wird, welcher seinerseits um eine Drehachse eines horizontalen Arms 118 schwenkbar ist. Dieser horizontale Arm 118 kann mit dem Schrank 90 verbunden sein.

Eine Permeations-Bestimmung mit Hilfe der in den Fig. 3 und 7 dargestellten Vorrichtung erfolgt in der Weise, dass bei entfernter Haube 20 und entferntem Gehäuse 21, 22 zunächst die Flaschen 23, 24 mit ihrem offenen Ende über die Spülrohre 25, 26 geschoben und in die Gewindefänger 32, 33 eingeschraubt werden. Sodann werden die Behälter 21, 22 über die Flaschen 23, 24 gestülpt und an ihrem offenen Ende hermetisch abgeschlossen. Hierauf wird durch Druck auf die Knöpfe 59, 60 und über die Gaszuleitungen 27, 28 Gas in die Flaschen 23, 24 eingeführt, bis ein vorgegebener Druck entsteht. Dieser Druck ist deutlich höher als der zwischen einem Behälter 21, 22 und einer Flasche 23, 24 bestehende Druck. Obgleich die Flaschen 23, 24 ausschließlich mit einem Gas aufgefüllt werden, ist darauf hinzuweisen, dass die Erfindung auch bei Flaschen oder anderen Behältern anwendbar ist, die mit einer gashaltigen Flüssigkeit gefüllt sind.

Der zwischen einem Behälter 21, 22 und einer Flasche 23, 24 herrschende Druck vorzugsweise Atmosphärendruck; es kann jedoch auch ein anderer Druck eingestellt werden. Nachdem sich der vorgegebene Druck in den Flaschen 23, 24 eingestellt hat, werden die Gaszuleitungen 27, 28 mittels der Absperrventile 55 bis 58 verschlossen. Der mittels der Drucksensoren 30, 31 gemessene Anfangsdruck $p_0$ in dem Zwischenraum 3 bleibt, nachdem eine konstante Temperatur im Gehäuse 20 und den Behältern 21, 22 erreicht wurde, bis zu einer Zeit $t_2$ nahezu konstant, um dann relativ stark anzusteigen. Dieser Anstieg kann z. B. dadurch erfasst werden, dass der Druck in bestimmten kurzen Zeitintervallen gemessen und mit dem jeweils zuvor gemessenen Druck verglichen wird. Während des Zeitraums $t_2$ - $t_1$ ist die dabei festgestellte Druckdifferenz sehr gering. Nach dem Zeitpunkt $t_2$ steigt diese Druckdifferenz jedoch stark an. Wurde zuvor eine bestimmte Druckdifferenz als Schwellwert festgelegt und wird dieser Schwellwert überschritten, kann automatisch das Erreichen des Knickpunkts an der Stelle $t_2$ ermittelt werden. Im Anschluss hieran werden die Druckdifferenzen, die sich innerhalb vorgegebener Zeiträume einstellen, gemessen.

Diese Druckdifferenzen werden durch das Zeitintervall dividiert, innerhalb dessen sie sich entwickelt haben, und der daraus entstandene Quotient wird mit dem Volumen des Zwischenraums 3 multipliziert. Der so erhaltene Wert stellt die Permeationsrate dar.

Bei dehnbaren Flaschen und bei sehr hohen Drücken in diesen Flaschen wird die Messung der absoluten Permeationsrate dadurch etwas verfälscht, dass die Volumina in der Flasche und im Zwischenraum zwischen Behälter und Flasche nicht konstant sind. Vielmehr nimmt das Volumen der Flasche bei steigendem Druck zu, während das Volumen im Zwischenraum abnimmt. Es ist jedoch möglich, die Verhältnisse der Volumina in Abhängigkeit von den jeweiligen Drücken in Eichmessungen zu ermitteln und bei den später gemessenen Werten zu berücksichtigen.

Bei der Haüptanwendung der Erfindung, der Ermittlung einer Permeations-Verringerung bei einer Beschichtung der Flasche, tritt der vorstehend erwähnte Fehler jedoch nicht in Erscheinung, weil er sich herauskürzt. Der Verbesserungsfaktor der Permeation P, der durch eine Beschichtung erzielt wird, wird durch den Quotienten

$$K_V = \frac{P_{\text{ohne Beschichtung}}}{P_{\text{mit Beschichtung}}}$$

definiert.
Da hierin gilt

$$K_V = \frac{V_3 \dfrac{\Delta p_{\text{ohne Beschichtung}}}{\Delta t_{\text{ohne Beschichtung}}}}{V_3 \dfrac{\Delta p_{\text{mit Beschichtung}}}{\Delta t_{\text{mit Beschichtung}}}}$$

kürzt sich die Variable $V_3$ heraus und es verbleibt für das Verbesserungsverfahren nur noch

$$K_V = \frac{\Delta p_{\text{ohne Beschichtung}} \cdot \Delta t_{\text{mit Beschichtung}}}{\Delta t_{\text{ohne Beschichtung}} \cdot \Delta p_{\text{mit Beschichtung}}}$$

Da die Messintervalle vor und nach der Beschichtung dieselben waren oder sein sollten, um die tatsächliche Verbesserung feststellen zu können, kürzen sich auch noch die Zeiten heraus, sodass für die Verbesserung nur noch das Druckverhältnis maßgebend ist:

$$K_V = \frac{\Delta p_{\text{ohne Beschichtung}}}{\Delta p_{\text{mit Beschichtung}}}$$

Bei dem vorstehend beschriebenen Beispiel wurde die Flasche erst dann mit $CO_2$ gefüllt, als sie die in der Fig. 3 gezeigte Position eingenommen hatte. Hierdurch entsteht der in der Fig. 2 gezeigte Kurvenverlauf.

Es ist indessen auch möglich, die Flasche zuvor mit einem Überdruck zu versehen und in geschlossenem Zustand so lange ruhen zu lassen, bis die Sättigung der Flaschenwände mit dem Überdruck-Gas abgeschlossen ist. Gibt man nun diese bereits mit Überdruck-Gas gefüllte Flasche in die Vorrichtung nach Fig.

3 und stülpt ihr den Behälter 21, 22 über, so setzt sofort im Zwischenraum 3 ein Druckanstieg ein, wie er in der Fig. 2 für den Zeitbereich $t_3 - t_2$ dargestellt ist. Das weitere Verfahren kann dann in der gleichen Weise ablaufen wie bei dem Verfahren, bei dem die Flaschen erst nach dem Einsetzen in die Messvorrichtung mit Gas gefüllt werden.

Ist es aus bestimmten Gründen nicht möglich, den Zwischenraum zwischen einer Flasche und dem sie umgebenden Behälter kleiner als den Inhalt der Flasche zu halten, so kann die Erfindung auch durch eine kinematische Umkehr realisiert werden. Hierbei wäre das Volumen der Flasche kleiner als das Volumen des Zwischenraums, der Druck im Zwischenraum wäre höher als der in der Flasche und die Druckmessungen würden in der Flasche vorgenommen.

Da es besonders wichtig ist, die Gasdurchlässigkeit eines Behälters schnell zu ermitteln, ist es besonders vorteilhaft, statt des Gases, für das eine Barriereschutzwirkung gewünscht wird, ein Gas mit höherer Permeationsgeschwindigkeit als Testgas einzusetzen. Wird z. B. statt $CO_2$ Helium als Testgas eingesetzt, so ergeben sich bei PET-Flaschen Messzeiten von nur einigen Stunden statt z. B. 2 bis 4 Tagen. Da der Zusammenhang zwischen der Permeation des Testgases und der Permeation des später in den Flaschen oder Behältern verwendeten Gases bekannt ist oder durch Versuche festgestellt werden kann, ist es möglich, die mit dem Gas hoher Permeation ermittelten Zahlenwerte anschließend umzurechnen.

Es versteht sich, dass auch mit Hilfe von Software negative Einflüsse, die von starken Temperaturänderungen und Sättigungseffekten hervorgerufen werden, selbstständig eliminiert werden.


**Patentansprüche**

1. Vorrichtung für die Bestimmung der Gasdurchlässigkeit eines Behälters (1; 23, 34) mit dem Volumen $V_1$, mit einer Umhüllung (2 ; 21, 22) für diesen Behälter (1; 23, 24), wobei die Umhüllung (2; 21, 22) das Volumen $V_2$ aufweist und wobei für das Volumenverhältnis für die Volumina von Behälter (1; 23, 24) und Umhüllung (2; 21, 22) die Beziehung $V_2 - V_1 < V_1$ gilt, einer Druckmesseinrichtung (30, 31), welche den Gasdruck in dem Raum (3) zwischen der Umhüllung (2; 21, 22) und dem Behälter (1; 23, 24) misst, einer Vorrichtung (24, 25) zum Erzeugen von Überdruck in dem Behälter (1; 23, 24) im Vergleich zum Druck in dem Raum (3) zwischen der Umhüllung (2 ; 21, 22) und dem Behälter (1; 23, 24), wobei der Druck,in dem Raum (3) zu Beginn der Bestimmung der Gasdurchlässigkeit Atmosphärendruck entspricht, und einer Einrichtung, die aus dem zeitlichen Verlauf des gemessenen Drucks die Gasdurchlässigkeit des Behälters (1; 23, 24) ermittelt.

2. Vorrichtung für die Bestimmung der Gasdurchlässigkeit eines Behälters (1; 23, 24) mit dem Volumen $V_1$, mit einer Umhüllung (2 ; 21, 22) für diesen Behälter (1; 23, 24), wobei die Umhüllung (2 ; 21, 22) das Volumen $V_2$ aufweist und wobei für das Volumenverhältnis für die Volumina von Behälter (1; 23, 24) und Umhüllung (2; 21, 22) die Beziehung $V_2 - V_1 > V_1$ gilt, einer Druckmesseinrichtung, die den Gasdruck im Behälter (1; 23, 24) misst, einer Vorrichtung zum Erzeugen von Überdruck in dem Raum (3) zwischen Umhüllung (2; 21, 22) und Behälter (1; 23, 24) im Vergleich zum Druck im Behälter (1; 23, 24) und einer Einrichtung, die aus dem zeitlichen Verlauf des gemessenen Drucks die Gasdurchlässigkeit des Behälters (1; 23, 24) ermittelt.

3. Vorrichtung nach Anspruch 1, bei der die Druckmesseinrichtung (30, 31 ) an einer beliebigen Stelle zwischen dem Behälter (1; 23, 24) und der Umhüllung (2; 21, 22) angeordnet ist.

4. Vorrichtung nach Anspruch 1, bei der die Druckmesseinrichtung (30, 31) außerhalb der Umhüllung (2; 21, 22) angeordnet ist und mit dem Innenraum der Umhüllung (2; 21, 22) über einen Kanal verbunden ist.

5. Vorrichtung nach einem der Ansprüche 1, 3 oder 4 bei der das Volumen zwischen der Innenwand der Umhüllung (2; 21, 22) und der Außenwand des Behälters (1; 23, 24) so klein wie möglich ist, ohne den Austritt von Gas aus dem Behälter (1; 23, 24) zu behindern.

6. Vorrichtung nach einem der Ansprüche 1, 3, 4 oder 5, bei der für die Messung des Drucks in dem Raum (3) zwischen Umhüllung (2; 21, 22) und Behälter (1; 23, 24) ein Absolutdruck-Messgeräts vorgesehen ist.

7. Vorrichtung nach einem der vorangehenden Ansprüche, bei der eine Heizung (29) vorgesehen ist, welche die Temperaturen des Gases in dem Behälter (1; 23, 24) und des Gases im Raum (3) zwischen Behälter (1; 23, 24) und Umhüllung (2; 21, 22) konstant auf einer vorgegebenen Temperatur hält.

8. Vorrichtung nach einem der vorangehenden Ansprüche, bei der ein mit einem Innengewinde versehener Körper (32, 33) vorgesehen ist, in den das Außengewinde eines Behälters (1; 23, 24) einschraubbar ist.

**9.** Vorrichtung nach einem der vorangehenden Ansprüche, bei der mehrere Vorrichtungen zur Bestimmung der Gasdurchlässigkeit eines Behälters (1; 23, 24) zu einer Einheit zusammengefasst sind, die mit einer Haube (20) abgedeckt werden.

**10.** Vorrichtung nach Anspruch 9, bei der mehrere durch eine Haube (80, 100, 81) abgedeckte Einheiten (50, 51; 53) auf einem gemeinsamen Schrank (90) angeordnet sind.

**11.** Vorrichtung nach Anspruch 10, bei der zusätzlich ein Monitor (115) mit einem Rechner (116) vorgesehen ist.

**12.** Vorrichtung nach Anspruch 1, bei der eine Druckmesseinrichtung (30, 31) zusätzlich in dem Behälter (1; 23, 24) angeordnet ist.

**13.** Verfahren zum Bestimmen der Gasdurchlässigkeit eines Behälters, bei dem
der Behälter (1; 23, 24) mit dem Volumen $V_1$ von einer den Behälter (1; 23, 24) hermetisch umschließenden Umhüllung (2; 21, 22) mit dem Volumen $V_2$ umgeben wird;
der Raum (3) mit dem Volumen $V_3$ zwischen Umhüllung (2; 21, 22) und Behälter (1; 23, 24) auf einen vorgegebenen Druck gebracht wird;
der Druck in dem Behälter (1; 23, 24) mittels Zuführung eines Testgases über den Druck in der Umhüllung (2; 21, 22) gebracht wird;
der Druck in dem Raum (3) zwischen Umhüllung (2 ; 21, 22) und Behälter (1; 23, 24) über einen vorgegebenen Zeitraum kontinuierlich oder in bestimmten Zeitabständen gemessen wird;
das Überschreiten eines vorgegebenen Schwellwerts des Drucks festgestellt und der hierbei ermittelte Druckwert $p_2$ sowie die Zeit $t_2$, zu dem der Druckwert $p_2$ auftritt, abgespeichert werden;
ein Druckwert $p_3$ nach einer vorgegebenen Zeit $t_3$ -$t_2$ ermittelt und die Permeation

$$P = V_3 \frac{p_3 - p_2}{t_3 - t_2} = V_3 \frac{\Delta p}{\Delta t}$$

errechnet wird, wobei $V_3 = V_2 - V_1$.

**14.** Verfahren zum Bestimmen der Gasdurchlässigkeit eines Behälters, bei dem
der Behälter (1; 23, 24) mit dem Volumen $V_1$ unter einen Gasdruck gebracht wird, der über dem Druck auf der Außenseite des Behälters (1; 23, 24) liegt;
der Behälter (1; 23, 24) für eine vorgegebene Zeit dem auf seiner Außenseite liegenden Druck ausgesetzt wird, wobei diese Zeit in etwa derjenigen Zeit entspricht, die vergehen muss, damit die Wand des Behälters (1; 23, 24) mit dem Gas gesättigt ist, das sich in dem Behälter (1; 23, 24) befindet;
der Behälter (1; 23, 24) nach der vorgebenen Zeit von einer den Behälter (1; 23, 24) hermetisch umschließenden Umhüllung (2; 21, 22) mit dem Volumen $V_2$ umgeben wird;
der Raum (3) zwischen Umhüllung (2; 21, 22) und Behälter (1; 23, 24) auf einen vorgegebenen Druck gebracht wird;
der Druck in dem Raum (3) zwischen Umhüllung (2; 21, 22) und Behälter (1; 23, 24) über einen vorgegebenen Zeitraum kontinuierlich oder in bestimmten Zeitabständen gemessen wird;
das Überschreiten eines vorgegebenen Schwellwerts des Drucks festgestellt und der hierbei ermittelte Druckwert $p_2$ sowie die Zeit $t_2$, zu dem der Druckwert $p_2$ auftritt, abgespeichert werden;
ein Druckwert $p_3$ nach einer vorgegebenen Zeit $t_3$ -$t_2$ ermittelt und die Permeation

$$P = V_3 \frac{p_3 - p_2}{t_3 - t_2} = V_3 \frac{\Delta p}{\Delta t}$$

errechnet wird, wobei $V_3 = V_2 - V_1$.

**15.** Verfahren nach den Ansprüchen 13 oder 14, bei dem der vorgegebene Druck in dem Raum (3) zwischen Umhüllung (2; 21, 22) und Behälter (1; 23, 24) zu Beginn des Verfahrens gleich dem Druck der umgebenden Atmosphäre ist.

**Claims**

**1.** A device for determining the gas permeability of a container (1; 23, 34) having a volume $V_1$, with
a sheath (2; 21 22) for said container (1; 23, 24), said sheath (2; 21, 22) comprising a volume $V_2$ and the relation $V_2$-$V_1$ < $V_1$ applying to the ratio that the volume of the container (1; 23, 24) bears to the volume of the sheath (2; 21, 22),
a pressure measuring equipment (30, 31) that measures the gas pressure within the space (3) between the sheath (2; 21, 22) and the container (1; 23 24),
a device (24, 25) for generating in the container (1; 23, 24) an overpressure compared to the pressure within the space (3) between the sheath (2; 21, 22) and the container (1; 23, 24), the pressure within the space (3) at the beginning of the gas permeability determination corresponding to the atmospheric pressure, and
an equipment that determines the gas permeability of the container (1; 23, 24) from the time history of the measured pressure.

**2.** The device for determining the gas permeability of a container (1; 23, 24) having the volume $V_1$, with

a sheath (2; 21, 22) for said container (1; 23, 24), said sheath (2; 21, 22) comprising the volume $V_2$ and the relation $V_2 - V_1 > V_1$ applying to the ratio that the volume of the container (1; 23, 24) bears to the volume of the sheath (2; 21, 22),

a pressure measuring equipment that measures the gas pressure within the container (1; 23, 24),

a device for generating in the space (3) between the sheath (2; 21, 22) and the container (1; 23, 24) an overpressure compared to the pressure within the container (1; 23, 24) and

an equipment that determines the gas permeability of the container ( 1; 23, 24) from the time history of the measured pressure.

3. The device according to claim 1, wherein the pressure measuring equipment (30, 31) is disposed anywhere between the container (1; 23, 24) and the sheath (2; 21, 22).

4. The device according to claim 1, wherein the pressure measuring equipment (30, 31) is disposed outside of the sheath (2; 21, 22) and is connected to the inner space of the sheath (2; 21, 22) via a channel.

5. The device according to one of the claims 1, 3 or 4, wherein the volume between the inner wall of the sheath (2; 21, 22) and the outer wall of the container (1; 23, 24) is as small as possible without impeding the escape of gas from the container (1; 23, 24).

6. The device according to one of the claims 1, 3, 4 or 5, wherein an absolute pressure measuring apparatus is provided for measuring the pressure in the space (3) between the sheath (2; 21, 22) and the container (1; 23, 24).

7. The device according to one of the afore mentioned claims, wherein a heater (29) is provided for maintaining the temperatures of the gas in the container (1; 23, 24) and of the gas in the space (3) between the container (1; 23, 24) and the sheath (2; 21, 22) at a given temperature.

8. The device according to one of the afore mentioned claims, wherein there is provided a body (32, 33) equipped with an internal thread into which the external thread of a container (1; 23, 24) is screwable.

9. The device according to one of the afore mentioned claims, wherein several devices for determining the gas permeability of a container (1; 23, 24) are combined into one unit that is covered by a hood (20).

10. The device according to claim 9, wherein several units (50, 51; 53) covered by a hood (80, 100, 81) are disposed on a common case (90).

11. The device according to claim 10, wherein there is additionally provided a monitor (115) with a computer (116).

12. The device according to claim 1, wherein a pressure measuring equipment (30, 31) is additionally disposed within the container (1; 23, 24).

13. A method for determining the gas permeability of a container, wherein
the container (1; 23, 24) having volume $V_1$ is surrounded by a sheath (2; 21, 22) having volume $V_2$ that hermetically encloses the container (1; 23, 24);
the space (3) having a volume $V_3$ between the sheath (2; 21, 22) and the container (1; 23, 24) is pressurized to a given pressure;
the pressure within the container (1; 23, 24) is increased above the pressure within the sheath (2; 21, 22) by adding a test gas;
the pressure within the space (3) between the sheath (2; 21, 22) and the container (1; 23, 24) is measured continually or at determined time intervals over a given period of time;
an increase above a given pressure threshold value is ascertained and the hereby detected pressure value $p_2$ as well as the time $t_2$ at which the pressure value $p_2$ appears are stored;
a pressure value $p_3$ is detected after a given time $t_3 - t_2$ and the permeation

$$P = V_3 \frac{p_3 - p_2}{t_3 - t_2} = V_3 \frac{\Delta p}{\Delta t}$$

is calculated, wherein $V_3 = V_2 - V_1$.

14. A method for determining the gas permeability of a container, wherein
the container (1; 23, 24) having volume $V_1$ is pressurized to a gas pressure that lies above the pressure on the outer side of the container (1; 23, 24);
the container (1; 23, 24) is exposed for a given period of time to the pressure that is applied to its outer side, said period of time corresponding approximately to the time necessary for the wall of the container (1; 23, 24) to become saturated with the gas that is located inside the container (1; 23, 24);
the container (1; 23, 24) is surrounded, after the given time, by a sheath (2; 21, 22) having volume $V_2$ that hermetically encloses the container (1; 23, 24);
the space (3) between the sheath (2; 21, 22) and the container (1; 23, 24) is pressurized to a given pressure;
the pressure in the space (3) between the sheath (2; 21, 22) and the container (1; 23, 24) is measured continually or at determined time intervals over a given period of time;
an increase above a given pressure threshold value is ascertained and the hereby detected pressure value $p_2$ as well as the time $t_2$ at which the pressure value $p_2$ appears are stored;
a pressure value $p_3$ is detected after a given time $t_3$-$t_2$ and the permeation

$$P = V_3 \frac{p_3 - p_2}{t_3 - t_2} = V_3 \frac{\Delta p}{\Delta t}$$

is calculated, wherein $V_3 = V_2 - V_1$.

15. The method according to the claims 13 or 14, wherein the given pressure in the space (3) between the sheath (2; 21, 22) and the container (1; 23, 24) at the beginning of the method is equal to the pressure of the surrounding atmosphere.

## Revendications

1. Dispositif pour la détermination de la perméabilité au gaz d'un conteneur (1 ; 23, 24) de volume $V_1$, avec
une enveloppe (2 ; 21, 22) pour ce conteneur (1 ; 23, 24), l'enveloppe (2 ; 21, 22) comportant un volume $V_2$ et où le rapport qui oppose le volume du conteneur (1 ; 23, 24) à celui de l'enveloppe (2 ; 23, 24) est exprimé par la relation $V_2 - V_1 < V_1$,
un système de mesure de pression (30, 31) qui mesure la pression du gaz dans l'espace (3) entre l'enveloppe (2 ; 21, 22) et le conteneur (1 ; 23, 24),
un dispositif (24, 25) pour générer une surpression dans le conteneur (1 ; 23, 24) par rapport à la pression dans l'espace (3) entre l'enveloppe (2 ; 21, 22) et le conteneur (1 ; 23, 24), la pression dans l'espace (3) au début de la détermination de la perméabilité au gaz correspondant à la pression atmosphérique, et
un système qui détermine la perméabilité au gaz du conteneur (1 ; 23, 24) à partir de la courbe de l'évolution de la pression mesurée en fonction du temps.

2. Dispositif pour la détermination de la perméabilité au gaz d'un conteneur (1 ; 23, 24) de volume $V_1$, avec
une enveloppe (2 ; 21, 22) pour ce conteneur (1 ; 23, 24), l'enveloppe (2 ; 21, 22) comportant le volume $V_2$ et où le rapport qui oppose le volume du conteneur (1 ; 23, 24) à celui de l'enveloppe (2 ; 23, 24) est exprimé par la relation $V_2 - V_1 > V_1$,
un système de mesure de pression qui mesure la pression du gaz dans le conteneur (1 ; 23, 24),
un dispositif pour générer une surpression dans l'espace (3) entre l'enveloppe (2 ; 21, 22) et le conteneur (1 ; 23, 24) par rapport à la pression dans le conteneur (1 ; 23, 24) et
un système qui détermine la perméabilité au gaz du conteneur (1 ; 23, 24) à partir de la courbe de l'évolution de la pression mesurée en fonction du temps.

3. Dispositif selon la revendication 1, où le système de mesure de pression (30, 31) est disposé en un endroit quelconque entre le conteneur (1 ; 23, 24) et l'enveloppe (2 ; 21, 22).

4. Dispositif selon la revendication 1, où le système de mesure de pression (30, 31) est disposé à l'extérieur de l'enveloppe (2 ; 21, 22) et est relié à l'espace intérieur de l'enveloppe (2 ; 21, 22) par l'intermédiaire d'une canalisation.

5. Dispositif selon l'une quelconque des revendications 1, 3 ou 4 où le volume entre la paroi interne de l'enveloppe (2 ; 21, 22) et la paroi externe du conteneur (1 ; 23, 24) est aussi petit que possible sans entraver la sortie de gaz du conteneur (1 ; 23, 24).

6. Dispositif selon l'une quelconque des revendications 1, 3, 4 ou 5 où il est prévu un appareil de mesure de pression absolue pour mesurer la pression dans l'espace (3) entre l'enveloppe (2 ; 1 21, 22) et le conteneur (1 ; 23, 24).

7. Dispositif selon l'une quelconque des revendications précédentes, où il est prévu un chauffage (29) qui maintient en permanence les températures des gaz dans le conteneur (1 ; 23, 24) et dans l'espace (3) entre le conteneur (1 ; 23, 24) et l'enveloppe (2 ; 21, 22) à une température donnée.

8. Dispositif selon l'une quelconque des revendications précédentes, où il est prévu un corps (32, 33) muni d'un taraudage dans lequel un filetage d'un conteneur (1 ; 23, 24) est vissable.

9. Dispositif selon l'une quelconque des revendications précédentes, où plusieurs dispositifs pour la détermination de la perméabilité au gaz d'un conteneur (1 ; 23, 24) sont regroupés en un ensemble qui est recouvert d'un capot (20).

10. Dispositif selon la revendication 9, où plusieurs ensembles (50, 51 ; 53) recouverts d'un capot (80, 100, 81) sont disposés sur une armoire (90) commune.

11. Dispositif selon la revendication 10, où un ordinateur (116) avec un moniteur (115) est en outre prévu.

12. Dispositif selon la revendication 1, où un système de mesure de pression (30, 31) est en outre disposé dans le conteneur (1 ; 23, 24)

**13.** Procédé pour déterminer la perméabilité au gaz d'un conteneur, où

on entoure le conteneur (1 ; 23, 24) de volume $V_1$ d'une enveloppe (2 ; 21, 22) de volume $V_2$ emprisonnant hermétiquement le conteneur (1 ; 23, 24) ;

on pressurise à une pression donnée l'espace (3) de volume $V_3$ entre l'enveloppe (2 ; 32, 22) et le conteneur (1 ; 23, 24) ;

on augmente la pression dans le conteneur (1 ; 23, 24) de manière à être supérieure à la pression dans l'enveloppe (2 ; 21, 22) par addition d'un gaz témoin ;

on mesure continuellement ou à intervalles déterminés durant une période de temps donnée la pression dans l'espace (3) entre l'enveloppe (2 ; 21, 22) et le conteneur (1 ; 23, 24) ;

on constate le dépassement d'une valeur seuil de pression donnée et on enregistre la valeur de pression $p_2$ obtenue à cette occasion ainsi que le temps $t_2$ auquel apparaît la valeur de pression $p_2$ ;

on obtient après un temps donné $t_3 - t_2$ une valeur de pression $p_3$ et on calcule la perméation

$$P = V_3 \frac{p_3 - p_2}{t_3 - t_2} = V_3 \frac{\Delta p}{\Delta t},$$

où $V_3 = V_2 - V_1$.

**14.** Procédé pour déterminer la perméabilité au gaz d'un conteneur où

on met le conteneur (1 ; 23, 24) de volume $V_1$ sous une pression gazeuse supérieure à la pression à la face extérieure du conteneur (1 ; 23, 24) ;

on expose le conteneur (1 ; 23, 24) à la pression régnant à la face extérieure durant une période de temps donnée, ce temps correspondant approximativement au temps qu'il faut à la paroi du conteneur (1 ; 23, 24) pour être saturée par le gaz qui se trouve dans le conteneur (1 ; 23, 24) ;

on entoure le conteneur (1 ; 23, 24) après la période de temps donnée d'une enveloppe (2 ; 21, 22) de volume $V_2$ emprisonnant hermétiquement le conteneur (1 ; 23, 24) ;

on pressurise à une pression donnée l'espace (3) entre l'enveloppe (2 ; 32, 22) et le conteneur (1 ; 23, 24) ;

on mesure continuellement ou à intervalles déterminés durant une période de temps donnée la pression dans l'espace (3) entre l'enveloppe (2 ; 21, 22) et le conteneur (1 ; 23, 24) ;

on constate le dépassement d'une valeur seuil de pression donnée et on enregistre la valeur de pression $p_2$ obtenue à cette occasion ainsi que le temps $t_2$ auquel apparaît la valeur de pression $p_2$ ;

on obtient après un temps donné $t_3 - t_2$ une valeur de pression $p_3$ et on calcule la perméation

$$P = V_3 \frac{p_3 - p_2}{t_3 - t_2} = V_3 \frac{\Delta p}{\Delta t},$$

où $V_3 = V_2 - V_1$.

**15.** Procédé selon les revendications 13 ou 14, où la pression donnée régnant dans l'espace (3) entre l'enveloppe (2 ; 21, 22) et le conteneur (1 ; 23, 24) au début du procédé est égale à la pression de l'atmosphère environnante.

**FIG.1**

## FIG.3

## FIG.2

FIG.4

FIG.5

**FIG.7**

**FIG.6**